# EUROPÄISCHE PATENTSCHRIFT

(11) **EP 1 863 585 B1**
(45) Veröffentlichungstag und Bekanntmachung des Hinweises auf die Patenterteilung: **07.11.2012**
(21) Anmeldenummer: 06723477.3
(22) Anmeldetag: 16.03.2006
(51) Int. Cl.: B01D 39/20

(54) **FILTERELEMENT MIT BESCHICHTUNG ZUR OBERFLÄCHENFILTRATION**
FILTER ELEMENT PROVIDED WITH A COATING FOR SURFACE FILTRATION
ELEMENT FILTRE A REVETEMENT UTILISE POUR UNE FILTRATION DE SURFACES

(30) Priorität: 18.03.2005 DE 102005012659
(43) Veröffentlichungstag der Anmeldung: 12.12.2007
(73) Patentinhaber: Herding GmbH Filtertechnik, 92224 Amberg (DE)
(72) Erfinder: HAJEK, Stefan, 92224 Amberg (DE); HERDING, Urs, 92289 Ursensollen (DE); PALZ, Kurt, 74564 Crailsheim (DE); RAABE, Wolfgang, 92224 Amberg (DE); THÜRAUF, Reiner, 92224 Amberg (DE); MEINDL, Bernd, 02337 Sulzbach-Rosenberg (DE)
(74) Vertreter: Klunker . Schmitt-Nilson . Hirsch
(86) Internationale Anmeldenummer: PCT/EP2006/002433
(87) Internationale Veröffentlichungsnummer: WO 2006/097313

(56) Entgegenhaltungen:
- EP-A- 1 449 573
- WO-A-99/18282
- WO-A-2005/053818
- US-B1- 6 309 546

## Beschreibung

Die Erfindung bezieht sich auf ein eigenstabiles, durchströmungsporöses Filterelement mit einer porösen Beschichtung zur Oberflächenfiltration an seiner Zuströmoberfläche, sowie ein Verfahren zur Herstellung eines solchen Filterelements.

Derartige Filterelemente sind mit einer Reihe von unterschiedlich aufgebauten Beschichtungen bekannt.

Beispielsweise zeigt die EP-A-1 449 573, die als nächstliegender Stand der Technik angesehen wird, ein Filterelement, dessen Beschichtung PTFE-Partikel aufweist, die sowohl als Oberflächenfiltrationsbestandteil als auch als Antihaftbestandteil wirken sollen. Das Gefüge aus PTFE-Partikeln soll einerseits Poren bilden, welche zwar ein Anlagern von abzufilternden Stoffen an der Beschichtung ermöglichen, dabei aber ein Eindringen dieser Partikel bis zum Filterhauptkörper verhindern. Es sollen außerdem anderseits die speziellen Eigenschaften von PTFE ausgenutzt werden, um ein zu festes Anlagern der abzufilternden Stoffe zu vermeiden und so die Abreinigung des Filters zu erleichtern. Zusammengehalten werden die PTFE-Partikel der Beschichtung durch einen organischen Kleber, der auch für eine Verbindung der Beschichtung mit dem Hauptkörper sorgt.

Der Erfindung liegt die Aufgabe zugrunde, ein Filterelement mit einer Oberflächenfiltrations-Beschichtung, die auch für erhöhte Temperaturen und/oder erhöhte Beständigkeit gegen chemischen Angriff brauchbar ist, zur Verfügung zu stellen.

Diese Aufgabe wird gelöst durch ein Filterelement gemäß Anspruch 1 und ein Verfahren zur Herstellung eines Filterelements gemäß Anspruch 17. Die Beschichtung des Filterelements weist auf:
(a) einen Hauptbestandteil aus Partikeln und/oder Fasern;
(b) einen anorganischen Binderbestandteil, welcher die Partikel und/oder Fasern des Hauptbestandteils aneinander bindet;
(c) einen Kleber, mittels welchem die porösen Beschichtung an das restliche Filterelement gebunden ist;
(d) und einen Antihaftbestandteil, welcher das Anhaften ausgefilterten Materials an der porösen Beschichtung abschwächt und das Abreinigen des Filterelements erleichtert.

Die erfindungsgemäße Beschichtung resultiert aus einer emulsionsstabilen Beschichtungsmasse.

Die Bindung der Beschichtung an das restliche Filterelement muss nicht ausschließlich durch den Kleber erfolgen, aber der Kleber ist am Zustandekommen dieser Bindung im erheblichem Maße beteiligt. Andererseits kann der Kleber zusätzlich auch an der Bindung der Partikel und/oder Fasern des Hauptbestandteils aneinander beteiligt sein. Der Kleber hat eine elastizitätssteigernde Wirkung für die Beschichtung und für den Übergang zwischen dem Hauptkörper des Filterelements und der Beschichtung.

Bevorzugte Partikel für den ersten Bestandteil sind Kieselgur-Partikel, Zeolit-Partikel, Polyvinylpyrrolidon-Partikel und Mischungen davon; unter diesen sind Kieselgur-Partikel ganz besonders bevorzugt. Bevorzugte Fasern für den ersten Bestandteil sind Keramikfasern. Die genannten bevorzugten Stoffe müssen nicht 100 % des ersten Bestandteils ausmachen; es reicht, wenn der erste Bestandteil einen oder mehrere der als bevorzugt genannten Stoffe zu einem erheblichen Anteil enthält. Andererseits ist bevorzugt, dass der erste Bestandteil im wesentlichen nur aus einem der als bevorzugt genannten Stoffe oder Mischungen davon besteht. Alternativ ist aber auch bevorzugt eine Mischung aus Keramikfasern und einer als bevorzugt genannten Art von Partikeln oder mehreren der als bevorzugt genannten Arten von Partikeln.

Der Binderbestandteil kann Wasserglas aufweisen oder daraus bestehen. Es ist allerdings bevorzugt, wenn der Binderbestandteil nicht Wasserglas ist. Der Binderbestandteil ist vorzugsweise Sol-basiert, besonders günstig basiert auf einem wässrigen Sol. Der Binderbestandteil weist vorzugsweise vernetztes SiO₂ oder vernetztes SiO₂-Derivat oder vernetztes TiO₂ oder vernetztes TiO₂-Derivat oder vernetztes ZrO₂ oder vernetztes ZrO₂-Derivat oder eine Mischung mehrerer der zuvor genannten Stoffe auf; diese Stoffe ergeben Bindekräfte von primär physikalischer Natur in der fertigen Beschichtung. Vernetztes SiO₂ ist ganz besonders bevorzugt. Auch bei dem Binderbestandteil muss dieser nicht zu 100 % aus einem der als bevorzugt genannten Stoffe oder einer Mischung von mehreren dieser Stoffe bestehen. Es ist allerdings bevorzugt, wenn der Binderbestandteil im wesentlichen aus einem der als bevorzugt genannten Stoffe oder einer Mischung mehrerer dieser Stoffe besteht. SiO₂-Derivat bedeutet einen Stoff, welcher außer den Siliziumatomen und den Sauerstoffatomen noch organische Reste enthält. Analog bei TiO₂ und ZrO₂.

Vorzugsweise ist der Kleber ein organischer Dispersionskleber. Wässrige Dispersionen sind besonders bevorzugt. -

Vorzugsweise ist der Antihaftbestandteil Polytetrafluorethylen - im folgenden kurz PTFE genannt - und/oder Polyethylen - im folgenden kurz PE genannt - und/oder Silicon. Ganz besonders bevorzugt ist PTFE. Ganz besonders bevorzugt ist der Fall, dass der Antihaftbestandteil im wesentlichen nur aus PTFE besteht. Eine besonders günstige Ausführungsform der Erfindung sieht vor, dass die Beschichtung nach dem Sol-Gel-Verfahren aufgebracht ist.

Eine weitere günstige Ausführungsform der Erfindung besteht darin, dass bei der Beschichtung der erste Bestandteil und der Antihaftbestandteil im Gewichtsverhältnis 2:1 bis 1:20, vorzugsweise 1,5:1 bis 1:15, stärker bevorzugt 1,5:1 bis 1:10, stärker bevorzugt 1,5:1 bis 1:5, stärker bevorzugt 1,5:1 bis 1:2, vorhanden sind. Das gilt ganz besonders für Partikel als ersten Bestandteil und ganz besonders für Kieselgur als ersten Bestandteil und PTFE als Antihaftbestandteil.

Noch eine weitere günstige Ausführungsform der Erfindung besteht darin, dass die Beschichtung (im wesentlichen nur) Kieselgur als erster Bestandteil und (im wesentlichen nur) PTFE als Antihaftbestandteil im Gewichtsverhältnis 1:1 bis 1:2 enthält.

Der Hauptkörper des Filterelements, d.h. das unter der Beschichtung befindliche Grundgerüst des Filterelements, ist vorzugsweise aus untereinander verbundenen, besonders bevorzugt aus versinterten, Kunststoffteilchen aufgebaut. Polyethylenteilchen sind besonders günstig.

Diejenige Variante des erfindungsgemäßen Filterelements, bei welcher Partikel als erster Bestandteil der Beschichtung vorhanden sind, läßt sich besonders günstig zur Flüssigkeitsfiltration oder zur Abscheidung von Ölnebeln aus einem Gasstrom verwenden. Ganz besonders wird hier die Filtration von Kühlschmierstoff ins Auge gefasst; Kühlschmierstoffe sind ölige Flüssigkeiten oder Emulsionen von schmierenden Stoffen in insbesondere Wasser, die bei der mechanischen bzw. schleifenden bzw. schneidenden bzw. andersartig abtragenden (z.B. Funkenerosion) Bearbeitung von Werkstücken eingesetzt werden. Der Kühlschmierstoff wird in der Regel im Kreislauf umgepumpt und enthält, wenn er die Stelle der Werkstückbearbeitung verlässt, abgeschliffene, abgeschnittene oder abgetragene Teilchen des bearbeiteten Werkstücks. Diese müssen herausgefiltert werden, ehe der Kühlschmierstoff erneut im Kreislauf zu dem Werkstück gelangt. Vorzugsweise wird die Filtration mittels des erfindungsgemäßen Filterelements, welches in ein Bad des Kühlschmierstoffs einfach eingetaucht ist, durchgeführt. Die ausgefilterten Fremdteilchen bleiben an der Außenoberfläche des Filterelements an der Beschichtung hängen, der filtrierte Kühlschmierstoff wird aus dem Inneren des Filterelements abgesaugt. Zur periodischen Abreinigung des Filterelements wird in geeigneten Zeitabständen die Pumpzirkulation kurz unterbrochen und durch einen kurzzeitigen Flüssigkeitsstrom, aus gereinigtem Kühlschmierstoffs in Gegenrichtung ersetzt, wodurch die außen an der Beschichtung angesammelten, ausgefilterten Fremdteilchen nach unten in das Kühlschmierstoff-Bad fallen und z.B. von dort mittels einer Schlammausbringvorrichtung entfernt werden können.

Aufgrund der Lehre der Erfindung kann man Filterelemente herstellen, die Fremdteilchen mit einer Größe von mehr als 5 µm, stärker bevorzugt mit einer Größe von mehr als 3 µm, im wesentlichen vollständig aus einer Flüssigkeit ausfiltern. Im Fall des Kühlschmierstoffs wird damit erreicht, dass die Bearbeitungsgenauigkeit des Werkstücks sehr hoch ist, weil extrem sauberer Kühlschmierstoff der Bearbeitungsstelle zuströmt. Erfindungsgemäße Filterelemente für die Gasfiltration können hergestellt werden, die Fremdteilchen mit einer Größe von mehr als 3 µm, stärker bevorzugt mit einer Größe von mehr als 1 µm, im wesentlichen vollständig ausfiltern. Die bevorzugte durchschnittliche Porengröße der Beschichtung liegt im Bereich 0,5 bis 10 µm, stärker bevorzugt 1 bis 8 µm, stärker bevorzugt 1,5 bis 7 µm.

Diejenige Variante des erfindungsgemäßen Filterelements, bei dem (weit überwiegend oder im wesentlichen ausschließlich) Fasern als erster Bestandteil der Beschichtung vorhanden sind, läßt sich besonders günstig zur Gasfiltration einsetzen. Aber auch erfindungsgemäße Filterelemente, bei denen (weit überwiegend oder im wesentlichen ausschließlich) Partikel als erster Bestandteil oder eine Mischung von Partikeln und Fasern als erster Bestandteil der Beschichtung vorhanden sind, lassen sich zur Gasfiltration einsetzen.

Insgesamt läßt sich das erfindungsgemäße Filterelement besonders günstig bei Einsatzsituationen verwenden, bei denen es auf Beständigkeit gegen erhöhte Temperatur und/oder auf Beständigkeit gegen chemischen Angriff ankommt. Das Filterelement kann so ausgebildet sein, dass es einer Dauereinsatztemperatur bis 180 °C standhält, oder kann so ausgebildet sein, dass es einer Dauereinsatztemperatur bis zu 150 °C standhält, oder kann so ausgebildet sein, dass es einer Dauereinsatztemperatur bis zu 120 °C standhält. Chemischer Angriff besteht z.B. bei dem bereits angesprochenen Kühlschmierstoff, ein anderer Einsatzfall mit chemischem Angriff ist Filtern von Verbrennungsabgas. Als Einsatzfälle mit Temperaturbeständigkeit seien Filtern von Verbrennungsabgasen, Filtern zur Produktabscheidung aus einem Gasstrom (z.B. Sprühtrockner, Trockner in der Lebensmittelindustrie) und Werkstoffrückgewinnung aus einem Gasstrom (z.B. Katalysator bei Wirbelbettreaktoren) genannt.

Statt "erster Bestandteil" könnte man auch "Hauptbestandteil" sagen. Der zweite Bestandteil erfüllt mehr eine Hilfsfunktion, weil er das Anhaften ausgefilterten Materials an der porösen Beschichtung abschwächt und das Abreinigen des Filterelements erleichtert.

In einer günstigen Ausführungsform ist das erfindungsgemäße Filterelement ein durch z.B. stoßartigen Gegenstrom abreinigbares Filterelement. Hierfür ist es gut, wenn der Hauptkörper so viel Elastizität hat, dass sich seine Wände beim Abreinigungsstoß etwas verformen. Durch die elastizitätssteigernde Eigenschaft des Klebers kann auch die Beschichtung derartige Verformungen vertragen, ohne abzublättern.

Die Erfindung und bevorzugte Ausgestaltungen der Erfindung werden nachfolgend anhand von Ausführungsbeispielen noch näher erläutert.
- Fig. 1: zeigt im Schnitt einen Ausschnitt eines Filterelements;
- Fig. 2: zeigt im Schnitt einen Ausschnitt eines Filterelements anderer Ausführungsform.

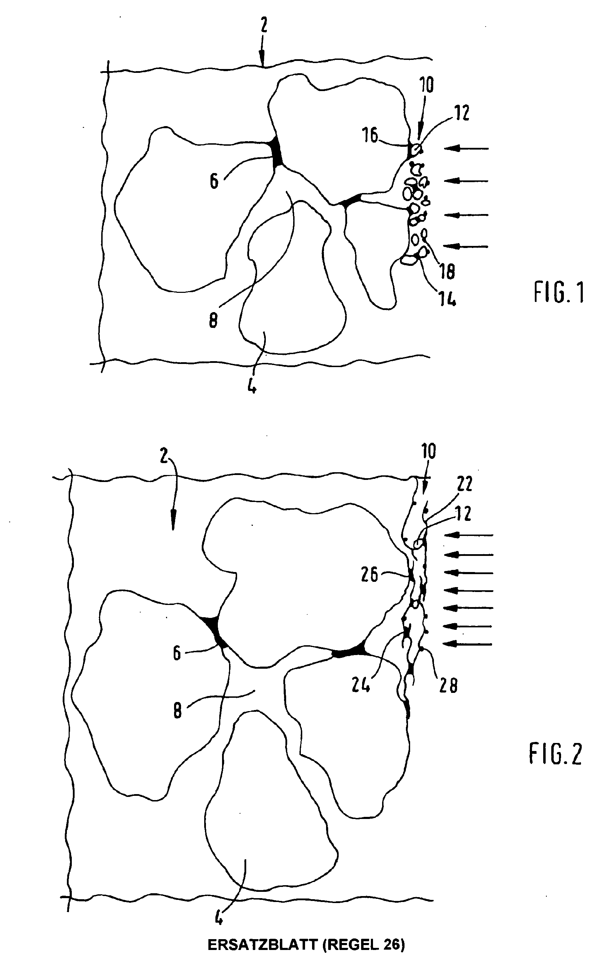

Bei dem in Fig. 1 als Ausschnitt dargestellten Filterelement 2 besteht der Hauptkörper aus Polyethylenteilchen 4, die an ihren Kontaktstellen 6 zusammengesintert sind. Die Poren 8 zwischen den Teilchen 4 haben eine durchschnittliche Größe von beispielsweise 10 bis 60 µm. Der Hauptkörper kann z.B. die Gestalt eines hohlen, flachen Quaders mit zick-zack-artig verlaufenden Wänden an den zwei größten Seiten und einer offenen Seite zum Abströmen der gereinigten Flüssigkeit oder des gereinigten Gases sein. Eine Alternative ist die Gestalt eines hohlen Zylinders mit gewellter Umfangsseite und einer offenen Stirnseite.

Die Beschichtung 10 des Filterelements besteht im wesentlichen aus Kieselgur-Partikeln 12, welche über vernetztes SiO₂ 14 gebunden und mittels eines organischen Dispersionsklebers 16 an ihren Kontaktstellen zu Polyethylenteilchen 4 an den Hauptkörper gebunden sind, sowie PTFE-Partikeln 18. Die Kieselgur-Partikel 12 sind so klein, dass die Poren zwischen ihnen im Durchschnitt unter 3 µ m groß sind. Bei der Herstellung des Filterelements 2 von Fig. 1 wird zunächst der Hauptkörper produziert und dann auf dessen Zuströmoberfläche die Beschichtung in entweder eher dünnflüssiger Konsistenz oder eher dickflüssiger bis breiiger Konsestenz aufgebracht, z.B. durch Sprühen, Aufrollen, Aufpinseln etc. Die aufzubringende Beschichtungsmasse besteht im wesentlichen aus Kieselgur-Partikeln, einem SiO₂-Sol, PTFE-Partikeln, organischem Dispersionskleber, Wasser und einer kleinen Menge Tensid, Benetzungshilfe oder Schaumverhüter. All diese Bestandteile sind problemlos am Markt erhältlich. Die Beschichtungsmasse ist emulsionsstabil. Nach dem Aufbringen der Beschichtungsmasse kommt es, in der Regel unter Anwendung leicht erhöhter Temperatur, zu einer Sol-Gel-Reaktion und schließlich, nach dem Verdunsten allen Wassers, zur Ausbildung der Beschichtung in festem Aggregatzustand. Bei der Sol-Gel-Reaktion und beim Verdunsten des Wassers erfolgt eine Vernetzung der SiO₂-Phase und dadurch eine Bindung der Kieselgur-Partikel aneinander.

Das Gewichtsverhältnis Kieselgur zu PTFE liegt für besonders gute Ergebnisse im Bereich 1:1 bis 1:2.

Das in Fig. 2 im Ausschnitt dargestellte Filterelement 2 unterscheidet sich von dem Filterelement 2 gemäß Fig. 1 durch eine andere Beschichtung 10. Jetzt besteht die fertige Beschichtung 10 im wesentlichen aus Keramikfasern 22, vernetztem SiO₂ 24, organischem Dispersionskleber 26 und PTFE-Teilchen 28. Kieselgur-Partikel 12 in geringerer Menge als bei Fig. 1 sind ebenfalls vorhanden. Was die Beschichtungsmasse im aufzubringenden Zustand anlangt, gelten die im Zusammenhang mit dem Ausführungsbeispiel gemäß Fig. 1 gemachten, weiteren Aussagen (weitere Bestandteile, Konsistenz etc).

Die Poren zwischen den Keramikfasern 22 haben im wesentlichen eine gleiche Größe wie die Poren zwischen den Kieselgur-Partikeln 12 bei der Ausführungsform gemäß Fig. 1. Die Keramikfasern 22 haben typischerweise einen Durchmesser von wenigen µm und eine Länge von 10 bis 30 µm; sie bestehen chemisch typischerweise im wesentlichen aus SiO₂/Al₂O₃.

Kieselgur ist eine gängige Bezeichnung für ein Material, welches typischerweise zu 70 bis 90 % aus amorpher Kieselsäure und zu 3 bis 12 % aus Wasser besteht.

Im Fall von Silicon als Antihaftbestandteil würden die Figuren im wesentlichen unverändert aussehen. Im Fall von PE als Antihaftbestandteil wären die PE-Partikel größer als die gezeichneten PTFE Partikel 18 oder 28 und hätten z.B. eine Größe, die etwas kleiner ist als die Größe der Kieselgur-Partikel 12. Im Fall von Wasserglas als anorganischer Binderbestandteil würden die Figuren im wesentlichen unverändert aussehen.

## Patentansprüche

1. Eigenstabiles, durchströmungsporöses Filterelement (2) mit einer porösen Beschichtung (10) zur Oberflächenfiltration an seiner Zuströmoberfläche, wobei die Beschichtung (10) aufweist:
einen ersten Bestandteil (12; 22) aus Partikeln (12) und/oder Fasern (22);
einen anorganischen Binderbestandteil (14; 24), welcher die Partikel (12) und/oder Fasern (22) des ersten Bestandteils aneinander bindet;
einen Kleber (16; 26), mittels welchem die poröse Beschichtung (10) an das restliche Filterelement gebunden ist;
und einen zweiten Bestandteil (18; 28), welcher als Antihaftbestandteil das Anhaften ausgefilterten Materials an der porösen Beschichtung (10) abschwächt und das Abreinigen des Filterelements erleichtert;
wobei die poröse Beschichtung (10) aus einer emulsionsstabilen Beschichtungsmasse resultiert.

2. Filterelement nach Anspruch 1 ,
**dadurch gekennzeichnet, dass** der erste Bestandteil eines aus der Gruppe, die aus Kieselgur-Partikel (12), Zeolit-Partikel, Polyvinylpyrrolidon-Partikel und Mischungen davon besteht, aufweist.

3. Filterelement nach Anspruch 2,
**dadurch gekennzeichnet, dass** der erste Bestandteil Kieselgur-Partikel (12) aufweist.

4. Filterelement nach einem der Ansprüche 1 bis 3,
**dadurch gekennzeichnet, dass** der erste Bestandteil Keramikfasern (22) aufweist.

5. Filterelement nach einem der Ansprüche 1 bis 4,
**dadurch gekennzeichnet, dass** der Binderbestandteil eines aus der Gruppe, die aus vernetztem SiO₂ (14; 24), vernetztem SiO₂-Derivat, vernetztem TiO₂, 260 vernetztem TiO₂-Derivat, vernetztem ZrO₂, vernetztem ZrO₂-Derivat, und Mischungen davon besteht, aufweist.

6. Filterelement nach Anspruch 5,
**dadurch gekennzeichnet, dass** der Binderbestandteil vernetztes SiO₂(14; 24) aufweist.

7. Filterelement nach einem der Ansprüche 1 bis 6,
**dadurch gekennzeichnet, dass** der Kleber ein organischer Dispersionskleber (16; 26) ist.

8. Filterelement nach einem der Ansprüche 1 bis 7,
**dadurch gekennzeichnet, dass** der Antihaftbestandteil Polytetrafluorethylen (PTFE) (18; 28) und/oder Polyethylen (PE) und/oder Silicon ist.

9. Filterelement nach einem der Ansprüche 1 bis 8,
**dadurch gekennzeichnet, dass** die Beschichtung (10) nach dem Sol-Gel-Verfahren aufgebracht ist.

10. Filterelement nach einem der Ansprüche 1 bis 9,
**dadurch gekennzeichnet, dass** die Beschichtung (10) Kieselgur (12) als ersten Bestandteil und PTFE (18; 28) als Antihaftbestandteil im Gewichtsverhältnis 1 : 1 bis 1 :2 enthält.

11. Filterelement nach einem der Ansprüche 1 bis 10,
**dadurch gekennzeichnet, dass** ein die Beschichtung (10) aufweisender Hauptkörper des Filterelements (2) aus untereinander verbundenen Kunststoffteilchen (4) aufgebaut ist.

12. Verwendung des Filterelements nach einem der Ansprüche 1 bis 11,
bei dem Partikel (12) als erster Bestandteil der Beschichtung (10) vorhanden sind, zur Flüssigkeitsfiltration oder zur Ölnebelabscheidung.

13. Verwendung nach Anspruch 12 zur Filtration von Kühlschmierstoff.

14. Verwendung nach Anspruch 12 oder 13, bei welcher Fremdteilchen mit einer Grösse von mehr als 5 µm im wesentlichen vollständig ausgefiltert werden.

15. Verwendung des Filterelements nach einem der Ansprüche 1 bis 11, bei dem Partikel (12) und/oder Fasern (22) als erster Bestandteil der Beschichtung (10) vorhanden sind, zur Gasfiltration.

16. Verwendung nach Anspruch 15,
bei welcher Fremdteilchen mit einer Grösse von mehr als 2 µm im wesentlichen vollständig ausgefiltert werden.

17. Verfahren zur Herstellung eines eigenstabilen, durchströmungsporösen Filterelements (2) mit einer porösen Beschichtung (10) zur Oberflächenfiltration an seiner Zuströmoberfläche, wobei die Beschichtung (10) aufweist:
einen ersten Bestandteil aus Partikeln (12) und/oder Fasern (22);
einen zweiten Bestandteil (18; 28), welcher als Antihaftbestandteil (18; 28) das Anhaften ausgefilterten Materials an der porösen Beschichtung (10) abschwächt und das Abreinigen des Filterelements (2) erleichtert;
einen anorganischen Binderbestandteil (14; 24), welcher die Partikel (12) und/oder Fasern (22) des ersten Bestandteils aneinander bindet, und
einen Kleber (16; 26), mittels welchem die poröse Beschichtung (10) an das restliche Filterelement gebunden ist;
wobei die Partikel (12) und/oder Fasern (22) des ersten Bestandteils, der zweite Bestandteil (18; 28), der anorganische Binderbestandteil (14; 24) und
der Kleber (16; 26) zu einer emulsionsstabilen Beschichtungsmasse zusammengefügt werden und die Beschichtungsmasse zur Ausbildung der Zuströmoberfläche auf das restliche Filterelement aufgebracht wird.

## Claims

1. An inherently stable, flow-porous filter element (2) having a porous coating (10) for surface filtration on its afflux surface, said coating (10) comprising:
a first component (12; 22) of particles (12) and/or fibers (22);
an inorganic binder component (14; 24) binding the particles (12) and/or the fibers (22) of the first component to each other;
an adhesive (16; 26) binding the porous coating (10) to the remainder of the filter element;
and a second component (18; 28) which, being an anti-adhesion component, mitigates the adhesion of filtered out material to the porous coating (10) and facilitates cleaning of the filter element;
said porous coating (10) resulting from an emulsion-stable coating mass.

2. A filter element according to claim 1,
**characterized in that** the first component comprises one material of the group consisting of kieselguhr particles (12), zeolite particles, polyvinyl pyrrolidone particles and mixtures thereof.

3. A filter element according to claim 2,
**characterized in that** the first component comprises kieselguhr particles (12).

4. A filter element according to any of claims 1 to 3,
**characterized in that** the first component comprises ceramic fibers (22).

5. A filter element according to any of claims 1 to 4,
**characterized in that** the binder component comprises one material of the group consisting of crosslinked SiO₂ (14; 24), crosslinked SiO₂ derivative, crosslinked TiO₂, crosslinked TiO₂ derivative, crosslinked ZrO₂, crosslinked ZrO₂ derivative and mixtures thereof.

6. A filter element according to claim 5,
**characterized in that** the binder component comprises crosslinked SiO₂ (14; 24).

7. A filter element according to any of claims 1 to 6,
**characterized in that** the adhesive is an organic dispersion adhesive (16; 26).

8. A filter element according to any of claims 1 to 7,
**characterized in that** the anti-adhesion component is polytetra-fluorothylene (PTFE) (18; 28) and/or polyethylene (PE) and/or silicone.

9. A filter element according to any of claims 1 to 8,
**characterized in that** the coating (10) is applied in accordance with the sol-gel process.

10. A filter element according to any of claims 1 to 9,
**characterized in that** the coating (10) contains kieselguhr (12) as first component and PTFE (18; 28) as anti-adhesion component in a weight ratio of 1:1 to 1:2.

11. A filter element according to any of claims 1 to 10,
**characterized in that** a main body of the filter element (2), which comprises the coating (10), is composed of mutually connected plastics particles (4).

12. The use of the filter element according to any of claims 1 to 11, comprising particles (12) as first component of the coating (10), for liquid filtration or for oil mist separation.

13. The use according to claim 12 for filtration of cooling lubricant.

14. The use according to claim 12 or 13, wherein foreign particles of a size of more than 5 µm are filtered out substantially completely.

15. The use of the filter element according to any of claims 1 to 11, comprising particles (12) and/or fibers (22) as first component of the coating (10), for gas filtration.

16. The use according to claim 15, wherein foreign particles of a size of more than 2 µm are filtered out substantially completely.

17. A method of making an inherently stable, flow-porous filter element (2) having a porous coating (10) for surface filtration on its afflux surface, said coating (10) comprising:
a first component (12; 22) of particles (12) and/or fibers (22);
a second component (18; 28) which, being an anti-adhesion component (18; 28), mitigates binding of filtered out material to the porous coating (10) and facilitates cleaning of the filter element (2);
an inorganic binder component (14; 24) binding the particles (12) and/or the fibers (22) of the first component to each other; and
an adhesive (16; 26) binding the porous coating (10) to the remainder of the filter element;
the particles (12) and/or fibers (22) of the first component, the second component (18; 28), the inorganic binder component (14; 24) and the adhesive (16; 26) being combined to form an emulsion-stable coating mass and the coating mass being applied to the remainder of the filter element for forming the afflux surface.

## Revendications

1. Élément filtre (2) de forme stable et poreux à l'écoulement, avec un revêtement poreux (10) pour la filtration de surfaces sur sa surface d'afflux, dans lequel le revêtement (10) présente :
un premier composant (12 ; 22) de particules (12) et/ou de fibres (22) ;
un composant de liant inorganique (14 ; 24) qui lie les particules (12) et/ou les fibres (22) du premier composant les unes aux autres ;
une colle (16 ; 26), à l'aide de laquelle le revêtement poreux (10) est lié à l'élément filtre restant ;
et un second composant (18 ; 28) qui affaiblit, en tant que composant antiadhésif, l'adhérence du matériau filtré sur le revêtement poreux (10) et facilite le nettoyage de l'élément filtre ;
dans lequel le revêtement poreux (10) résulte d'une masse de revêtement à émulsion stable.

2. Élément filtre selon la revendication 1, **caractérisé en ce que** le premier composant présente l'une des particules du groupe qui se compose de particules de diatomite (12), de particules de zéolite, de particules de polyvinylpyrrolidone et de mélanges de celles-ci.

3. Élément filtre selon la revendication 2, **caractérisé en ce que** le premier composant présente des particules de diatomite (12).

4. Élément filtre selon l'une quelconque des revendications 1 à 3, **caractérisé en ce que** le premier composant présente des fibres de céramique (22).

5. Élément filtre selon l'une quelconque des revendications 1 à 4, **caractérisé en ce que** le composant de liant présente un élément du groupe qui se compose de SiO₂ réticulé (14 ; 24), d'un dérivé de SiO₂ réticulé, de TiO₂ réticulé, d'un dérivé de TiO₂ réticulé 260, de ZrO₂ réticulé, d'un dérivé de ZrO₂ réticulé et de mélanges de ceux-ci.

6. Élément filtre selon la revendication 5, **caractérisé en ce que** le composant de liant présente du SiO₂ réticulé (14 ; 24).

7. Élément filtre selon l'une quelconque des revendications 1 à 6, **caractérisé en ce que** la colle est une colle à dispersion (16 ; 26) organique.

8. Élément filtre selon l'une quelconque des revendications 1 à 7, **caractérisé en ce que** le composant antiadhésif est un polytétrafluoréthylène (PTFE) (18 ; 28) et/ou un polyéthylène (PE) et/ou une silicone.

9. Élément filtre selon l'une quelconque des revendications 1 à 8, **caractérisé en ce que** le revêtement (10) est appliqué selon le procédé sol-gel.

10. Élément filtre selon l'une quelconque des revendications 1 à 9, **caractérisé en ce que** le revêtement (10) contient de la diatomite (12) comme premier composant et du PTFE (18 ; 28) comme composant antiadhésif dans un rapport de poids de 1:1 à 1:2.

11. Élément filtre selon l'une quelconque des revendications 1 à 10, **caractérisé en ce qu'**un corps principal présentant le revêtement (10) de l'élément de filtre (2) est constitué de particules plastiques (4) reliées entre elles.

12. Utilisation de l'élément filtre selon l'une quelconque des revendications 1 à 11, pour laquelle des particules (12) sont présentes comme premier composant du revêtement (10) pour la filtration de liquide ou pour la séparation de vapeur d'huile.

13. Utilisation selon la revendication 12 pour la filtration de réfrigérant lubrifiant.

14. Utilisation selon la revendication 12 ou 13, pour laquelle des particules externes d'une grandeur supérieure à 5 µm sont sensiblement complètement filtrées.

15. Utilisation de l'élément filtre selon l'une quelconque des revendications 1 à 11, pour laquelle des particules (12) et/ou des fibres (22) sont présentes comme premier composant du revêtement (10) pour la filtration de gaz.

16. Utilisation selon la revendication 15, pour laquelle des particules externes d'une grandeur supérieure à 2 µm sont sensiblement complètement filtrées.

17. Procédé de fabrication d'un élément filtre (2) de forme stable et poreux à l'écoulement, avec un revêtement poreux (10) pour la filtration de surfaces sur sa surface d'afflux, dans lequel le revêtement (10) présente :
un premier composant de particules (12) et/ou de fibres (22) ;
un second composant (18 ; 28) qui affaiblit en tant que composant antiadhésif (18,28) l'adhérence du matériau filtré sur le revêtement poreux (10) et facilite le nettoyage de l'élément filtre (2) ;
un composant de liant inorganique (14 ; 24) qui lie les particules (12) et/ou les fibres (22) du premier composant les unes aux autres, et
une colle (16 ; 26), à l'aide de laquelle le revêtement poreux (10) est lié à l'élément filtre restant ;
dans lequel les particules (12) et/ou les fibres (22) du premier composant, le second composant (18 ; 28), le composant de liant inorganique (14 ; 24) et la colle (16 ; 26) sont réunis en une masse de revêtement à émulsion stable et la masse de revêtement est appliquée sur l'élément filtre restant pour la réalisation de la surface d'afflux.
